# EUROPÄISCHE PATENTSCHRIFT

(11) **EP 1 837 979 B1**
(45) Veröffentlichungstag und Bekanntmachung des Hinweises auf die Patenterteilung: **17.02.2016**
(21) Anmeldenummer: 07102807.0
(22) Anmeldetag: 21.02.2007
(51) Int. Cl.: H02K 7/116

(54) **Elektromotor, insbesondere Wischermotor für Kraftfahrzeuge, mit einer Excenterbuchse**
Electric motor, in particular wind screen wiper motor for motor vehicles, with eccentric bushing
Moteur électrique, en particulier moteur d'essuie-glace pour véhicules automobiles, avec douille excentrée

(30) Priorität: 22.03.2006 DE 102006013161
(43) Veröffentlichungstag der Anmeldung: 26.09.2007
(73) Patentinhaber: ROBERT BOSCH GMBH, 70442 Stuttgart (DE)
(72) Erfinder: Trumpp, Gerald, 76549, Huegelsheim (DE); Wegner, Norbert, 77815, Buehl (DE); Maier, Gerald, 77833, Ottersweier-Unzhurst (DE); Mueller, Andreas, 76863, Herxheim (DE)

(56) Entgegenhaltungen:
- EP-A2- 0 735 646
- DE-A1- 10 313 734
- DE-A1-102004 009 717
- DE-B- 1 118 341
- DE-U- 7 007 020
- DE-U1- 9 017 993
- FR-A1- 2 808 055
- JP-A- 2003 134 722

## Beschreibung

### Stand der Technik

Die vorliegende Erfindung betrifft einen Elektromotor, insbesondere ein Wischermotor für Kraftfahrzeuge, mit einer Excenterbuchse, die einen Excenterbuchsenbund und einen Excenterbuchsenschaft umfasst, wobei die Excenterbuchse mit ihrem Excenterbuchsenschaft zwischen einer Antriebswelle und einem Getriebegehäuse eingesetzt ist, um die Position einer Antriebswelle in dem Getriebegehäuse einzustellen.

Derartige Elektromotoren bzw. Wischermotoren sind im Stand der Technik bekannt. Allerdings sind insbesondere die Abtriebswellen dieser Wischermotoren allenfalls spritzwassergeschützt und werden nur auf geringe Weise oder gar nicht vor einem Eindringen von Wasser in das Gehäuse oder in den Motor geschützt. Dringt in einen solchen Elektromotor Wasser ein, besteht nicht nur die Gefahr, dass innerhalb des Motors Kurzschlüsse auftreten, sondern auch, dass die einzelnen Baugruppen des Motors bzw. des Getriebes korrosionsanfällig sind, so dass die Lebensdauer des Getriebes stark verkürzt wird. Insbesondere Elektromotoren, die im Motorraum von Kraftfahrzeugen angeordnet sind, unterliegen starken Belastungen durch entsprechende Witterungseinflüsse. Ein besonders gefährdeter Bereich in einem Wischermotor ist der Bereich, in dem die in der Excenterbuchse gelagerte Abtriebswelle aus dem Getriebegehäuse hinaustritt.

Ein gattungsgemäßer Elektromotor ist beispielsweise aus der DE 10 2004 009 717 A1 bekannt.

### Offenbarung der Erfindung

### Neue Beschreibungsseite 2

Es ist daher die Aufgabe der vorliegenden Erfindung, einen Elektromotor, insbesondere einen Wischermotor für Kraftfahrzeuge bereitzustellen, der eine verbesserte Abdichtung des Getriebes oder des Motors gegen ein Eindringen von Wasser oder Schmutzpartikeln in das Gehäuse aufweist.

Diese Aufgabe wird erfindungsgemäß dadurch gelöst, dass eine Dichtkappe auf die Abtriebswelle aufgeschoben ist, die den Excenterbuchsenbund vollständig umschließt und der Excenterbuchsenbund konzentrisch mit der Abtriebswelle, der Excenterbuchsenschaft exzentrisch zu der Abtriebswelle ausgebildet ist.

Diese Aufgabe wird erfindungsgemäß dadurch gelöst, dass eine Dichtkappe auf die Abtriebswelle aufgeschoben ist, die den Excenterbuchsenbund vollständig umschließt.

### Vorteile der Erfindung

Zusätzlich zu einer an sich bekannten Aufbringung von Fett in den Bereich, in dem die Abtriebswelle aus dem Excenterbuchsenbund austritt, kommt erfindungsgemäß eine Dichtkappe zur Anwendung, die die Excenterbuchse vor vermehrter Wasserbeaufschlagung schützt, und so ein Auswaschen der Excenterbuchse verhindert, was anderenfalls zu einem Trockenlaufen der Abtriebswelle in der Excenterbuchse führen könnte.

Die Dichtkappe schützt auch vor Ablagerung von Schmutzpartikeln zwischen der Excenterbuchse und der Abtriebswelle, was sonst nachteilig zu Abrasionen an der Abtriebswelle bzw. der Excenterbuchse und somit zu einer Verkürzung der Lebensdauer des Getriebes führen könnte.

Eine besonders bevorzugte Ausführungsform sieht vor, den Excenterbuchsenbund konzentrisch mit der Abtriebswelle auszubilden, wobei der Excenterbuchsenschaft immer noch die zur Positionierung notwendige Exzentrizität aufweist. Im Stand der Technik wird der Excenterbuchsenbund der Excenterbuchse im Bereich der Exzentrizität abgeflacht ausgeführt und kann dadurch allenfalls auf nur sehr aufwendige Weise vollständig abgedichtet werden. Bei konzentrischer Ausbildung des Excenterbuchsenbundes zur Antriebswelle kann die Dichtkappe gleichmäßig ohne Exzentrizität auf dem Excenterbuchsenbund umlaufen. Nur noch der Excenterbuchsenschaft weist in diesem Ausführungsbeispiel eine Exzentrizität zur Abtriebswelle auf.

Um eventuelle Bauteiletoleranzen bezüglich der Excenterbuchse auszugleichen, kann die Dichtkappe mindestens zwei Dichtlippen in den dem Excenterbuchsenbund umschließenden Bereich aufweisen. Dadurch ist gewährleistet, dass selbst bei größeren Unebenheiten in dem Bauteil immer mindestens eine Dichtlippe auf dem Excenterbuchsenbund läuft.

In einem weiteren Ausführungsbeispiel der Erfindung ist die Excenterbuchse aus einem mit Öl oder mit einem anderen zur Schmierung geeigneten Stoff getränkten Sintermetall hergestellt. Sintermetalle haben meist einen sehr hohen Reibkoeffizienten, so dass bei einem Umlaufen der Dichtkappe die Gefahr besteht, dass die Lebensdauer der Dichtkappen oder der an der Dichtkappe ausgebildeten Dichtlippen starken Abrasionen ausgesetzt ist, was zu einer erheblichen Verkürzung der Lebensdauer führen kann. Um dieser Abrasion entgegenzutreten, kann der Bereich des Excenterbuchsenbundes, auf dem die Dichtkappe umläuft, kann glatt kalibriert ausgeführt sein, um eine besonders gute Oberflächengüte für den Rundlauf der Dichtkappe bereitzustellen.

Um ein Abrutschen der Dichtkappe von den Excenterbuchsenbund insbesondere bei stark dynamischer Beanspruchung zu verhindern, weist der Excenterbuchsenbund eine Ausnehmung wie beispielsweise eine umlaufende Nut oder einen Abstich zur Aufnahme der Dichtkappe auf. Die Dichtkappe kann dazu in dem den Excenterbuchsenbund umschließenden Bereich einen gegenüber dem Bereich oberhalb des Excenterbuchsenbundes geringfügig verringerten Durchmesser aufweisen.

Bei der Montage der Excenterbuchse muss die Lage der Exzentrizität kenntlich gemacht werden, damit die Excenterbuchse entsprechend der gewünschten Verschiebung der Lagerung der Abtriebswelle eingebaut werden kann. Um gleichzeitig den Rundlauf der Dichtkappe auf dem Excenterbuchsenbund nicht zu beeinträchtigen, kann an Stelle des im Stand der Technik bekannten Erkennungsmerkmal der Abflachung des Bundes im Bereich der Exzentrizität eine Markierung beispielsweise an der Innenseite der Excenterbuchse bzw. an der Stirnseite wie zum Beispiel in Form einer darin eingeprägten Markierungsnase vorgesehen sein. Auch andere Markierungsarten wie beispielsweise ein die Exzentrizität kennzeichnender Pfeil auf der Stirnfläche der Excenterbuchse sind denkbar.

Zur Gewährleistung einer langhaltigen Schmierung bzw. eines zusätzlichen Schutz vor einem Eindringen von Wasser oder Schmutzpartikeln in das Getriebe kann ein von der Dichtkappe umschlossener Raum als Schmiermittelreservoir ausgebildet sein, der mit einem Schmiermittel und/oder mit einer wasser- und schmutzabweisenden Substanz, insbesondere Schmierfett befüllt werden kann.

Eine bevorzugte Ausführungsform der vorliegenden Erfindung sieht vor, das axiale Spiel der Dichtkappe zum Ende der Abtriebswelle hin durch eine auf die Abtriebswelle aufgeschobene Motorkurbel zu begrenzen. Es ist auch möglich, einseparates Bauteil wie beispielsweise eine Kontermutter auf die Abtriebswelle aufzuschrauben, um das axiale Spiel zu beschränken.

Zur axialen Begrenzung der Abtriebswelle ist in einem weiteren Ausführungsbeispiel eine Federscheibe vorgesehen, die an der Excenterbuchse angeordnet ist, um die Abtriebswelle in ihrer durch die Exzentrizität der Excenterbuchse vorgegebenen Position zu fixieren. Natürlich sind auch andere Fixierungsmittel wie beispielsweise Positionierungskeile zur Fixierung der Abtriebswelle in der gewünschten Position denkbar.

Die Federscheibe kann entweder passgenau eingesetzt werden oder auch auf ihren Innenumfang verteilt Aussparungen aufweisen, in die an dem die Abtriebswelle umschließenden Abschnitt der Dichtkappe komplementär ausgebildete Restnasen eingreifen.

Dadurch wird eine zusätzliche Fixierung und Positionierung der Dichtkappe an der Abtriebwelle gewährleistet.

Hinsichtlich weiterer vorteilhafter Ausgestaltungen und Weiterbildungen der Erfindung wird auf die Unteransprüche verwiesen.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1:: einen Querschnitt durch das Abtriebsgetriebes eines erfindungsgemäßen Wischermotors für Kraftfahrzeuge;
- Figur 2:: eine Vergrößerung einer Teilansicht des Antriebsgetriebes gemäß der Figur 1 mit einer montierten Dichtkappe;
- Figur 3:: eine perspektivische Darstellung der erfindungsgemäßen Dichtkappe;
- Figur 4:: einen Querschnitt durch die erfindungsgemäße Dichtkappe gemäß der Figur 3; und
- Figur 5:: eine perspektivische Darstellung einer erfindungsgemäßen Excenterbuchse.

### Ausführungsformen der Erfindung

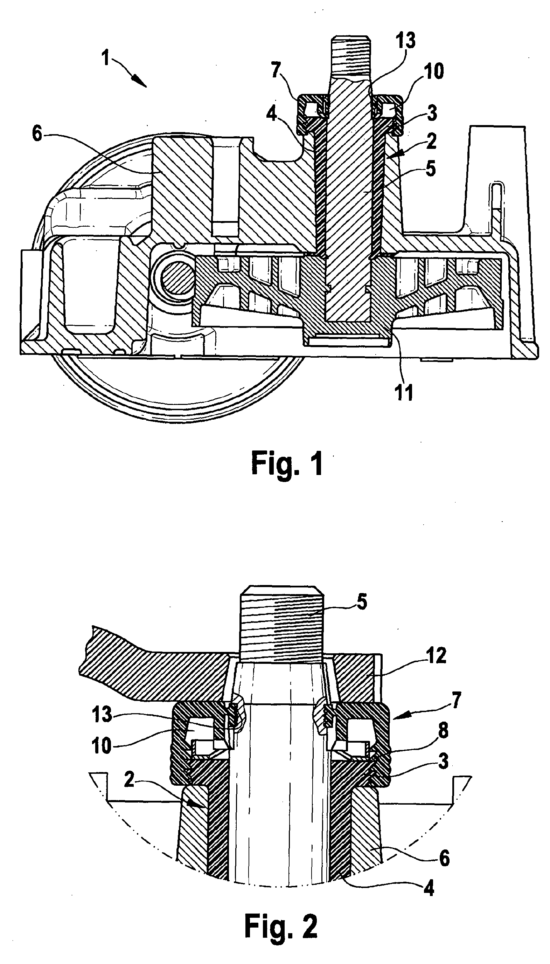

Die Figuren 1 und 2 zeigen einen Querschnitt durch ein Abtriebsgetriebe eines erfindungsgemäßen Wischermotors für Kraftfahrzeuge 1. Eine Excenterbuchse 2 weist einen

Excenterbuchsenbund 3 und einen Excenterbuchsenschaft 4 auf. Die Excenterbuchse 2 ist mit ihrem Excenterbuchsenschaft 4 zwischen einer Abtriebswelle 5 und einem Getriebegehäuse 6 eingesetzt, um die Position der Abtriebswelle 5 in dem Getriebegehäuse 6 einzustellen. Eine Dichtkappe 7 ist auf die Abtriebswelle 5 aufgeschoben und umschließt den Excenterbuchsenbund 3 vollständig. Der Excenterbuchsenbund 3 ist konzentrisch mit der Abtriebswelle 5 ausgebildet. Nur noch der Excenterbuchsenschaft 4 weist hier eine Exzentrizität zur Abtriebswelle 5 auf.

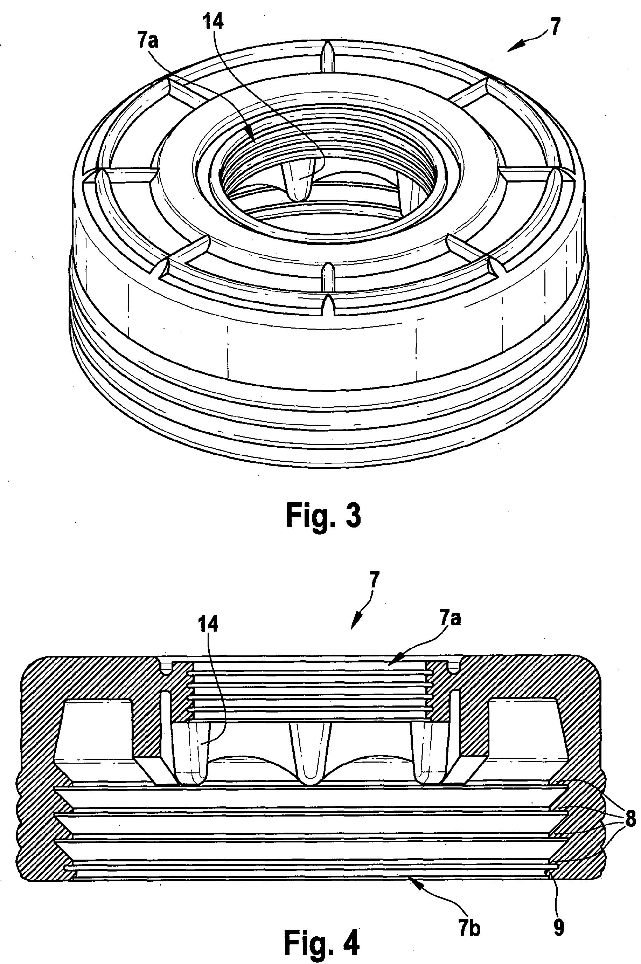

In dem den Excenterbuchsenbund 3 umschließenden Bereich sind in der Dichtkappe 7 vier Dichtlippen 8 sowie eine Opferlippe 9 für die Montage ausgebildet, wie auch sehr gut in den Figuren 3 und 4 zu sehen ist. Es ist natürlich auch möglich, die Zahl der Dichtungslippen entsprechend des Anforderungsprofils zu verkleinern oder zu vergrößern. Die Dichtlippen 8 sorgen dafür, dass auch bei eventuellen Bauteiltoleranzen eine vollständige Abdichtung gegeben ist. Selbst bei starker Abweichung der Bauteilgeometrien von den gewünschten Werten laufen immer mindestens zwei Dichtlippen 8 auf dem Excenterbuchsenbund 3 um.

Die Excenterbuchse 2 ist aus einem mit Schmierfett oder auch mit Öl getränkten Sintermetall hergestellt. Der Bereich des Excenterbuchsenbundes 3, auf dem die Dichtkappe 7 umläuft, ist glatt kalibriert ausgeführt, um eine besonders gute Oberflächengüte für den Rundlauf der Dichtkappe 7 auf dem Excenterbuchsenbund zu gewährleisten und so die Lebensdauer der Dichtkappe durch Verringerung der Abrasion zu verlängern.

Die Dichtkappe 7 umschließt einen Raum 10, der als Schmiermittelreservoir dient und mit Schmierfett zur zusätzlichen Schmierung bzw. Sicherung gegen Wasserantritt befällt ist. An der der Dichtkappe 7 abgewandten Seite ist die Abtriebswelle 5 in einem Zahnrad 11 gelagert. An der gegenüberliegenden Seite der Abtriebswelle 5 begrenzt eine auf die Abtriebswelle 5 aufgeschobene Motorkurbel 12 das axiale Spiel der Dichtkappe 7.

Zwischen der Excenterbuchse 2 und der Dichtkappe 7 ist zur Fixierung der Abtriebswelle 5 in ihrer durch die Exzentrizität der Excenterbuchse 2 vorgegebenen Position eine Federscheibe 13 angeordnet. Die Federscheibe 13 weist auf ihrem Umfang verteilt hier nicht dargestellte Aussparungen auf, in welche an dem die Abtriebswelle 5 umschließender Abschnitt der Dichtkappe 7 komplementär ausgebildete Rastnasen 14 eingreifen, um die Dichtkappe 7 an der Abtriebswelle 5 zu fixieren. Im montierten Zustand ist die Dichtkappe 7 mit ihrem kleineren Durchmesser 7a auf die Abtriebswelle 5 aufgeschoben. Der kleinere Durchmesser 7a der Dichtkappe 7 ist so gewählt, dass durch eine insbesondere kraftschlüssige Verbindung an der Abtriebswelle 5 anliegt und mit ihr umläuft, was mit einer statischen Dichtung gleichzusetzen ist. An ihrem größeren Durchmesser 7b, welcher im Bereich des Excenterbuchsenbundes 3 ausgebildet ist, läuft die Dichtkappe 7 auf dem Excenterbuchsenbund 3 um und bildet somit eine dynamische Dichtung. Entgegen aller Konstruktionsrichtlinien für Dichtungen dichtet die Dichtkappe 7 somit an ihrem kleinen Durchmesser 7a statisch an der Abtriebswelle 5 und am größeren Durchmesser 7b dynamisch auf dem Excenterbuchsenbund 3.

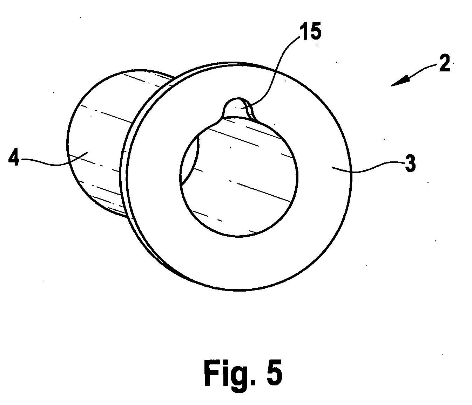

Die Figur 5 zeigt eine erfindungsgemäße Excenterbuchse 2 mit einem Excenterbuchsenbund 3 und einem Excenterbuchsenschaft 4. Der Excenterbuchsenbund 3 ist konzentrisch mit der in der Figur 5 nicht dargestellten Abtriebswelle 5 ausgeführt, der Excenterbuchsenschaft 4 exzentrisch zu der Abtriebswelle 5. Der Excenterbuchsenbund 3 ist glatt kalibriert und weist eine Markierung 15 zur Kennzeichnung der Lage der Exzentrizität der Excenterbuchse 2 auf, wobei die Markierung 15 derart an der Stirnseite der Excenterbuchse 2 angeordnet ist, dass sie den Rundlauf der Dichtkappe 7 auf den Excenterbuchsenbund 3 im montierten Zustand nicht beeinträchtigt.

## Patentansprüche

1. Elektromotor, insbesondere Wischermotor für Kraftfahrzeuge (1), mit einer Excenterbuchse (2), die einen Excenterbuchsenbund (3) und einen Excenterbuchsenschaft (4) umfasst, wobei die Excenterbuclise (2) mit ihrem Excenterbuchsenschaft (4) zwischen einer Abtriebswelle (5) und einem Getriebegehäuse (6) eingesetzt ist, um die Position der Abtriebswelle (5) in dem Getriebegehäuse (6) einzustellen, **dadurch gekennzeichnet, dass** eine Dichtkappe (7) auf die Abtriebswelle (5) aufgeschoben ist, die den Excenterbuchsenbund (3) vollständig umschließt und der Excenterbuchsenbund (3) konzentrisch mit der Abtriebswelle (5), der Excenterbuchsenschaft (4) exzentrisch zu der Abtriebswelle (5) ausgebildet ist.

2. Elektromotor nach Anspruch 1, **dadurch gekennzeichnet, dass** die Dichtkappe (7) auf dem Excenterbuchsenbund (3) umläuft.

3. Elektromotor nach einem der Ansprüche 1 bis 2, **dadurch gekennzeichnet, dass** der Excenterbuchsenbund (3) glatt kalibriert ist.

4. Elektromotor einem der vorhergehenden Ansprüche, **dadurch gekennzeichnet, dass** an dem den Excenterbuchsenbund (3) umschließenden Bereich mindestens zwei Dichtlippen (8) in der Dichtkappe (7) ausgebildet sind.

5. Elektromotor einem der vorhergehenden Ansprüche, **dadurch gekennzeichnet, dass** der Excenterbuchsenbund (3) eine umlaufende Ausnehmung zur Aufnahme der Dichtkappe (7) aufweist.

6. Elektromotor nach einem der vorhergehenden Ansprüche, **dadurch gekennzeichnet, dass** zur Kennzeichnung der Lage der Exzentrizität der Excenterbuchse (2) eine Markierung (15) an dem Excenterbuchsenbund (3) derart angeordnet ist, dass sie den Rundlauf der Dichtkappe (7) auf dem Excenterbuchsenbund (3) nicht beeinträchtigt.

7. Elektromotor nach einem der vorhergehenden Ansprüche, **dadurch gekennzeichnet, dass** die Dichtkappe (7) einen Raum (10) umschließt, der als Schmiermittelreservoir dient und/oder mit einer wasser- und schmutzabweisenden Substanz insbesondere Schmierfett befüllbar ist.

8. Elektromotor nach einem der vorhergehenden Ansprüche, **dadurch gekennzeichnet, dass** an der Excenterbuchse (2) eine Federscheibe (13) zur Fixierung der Abtriebswelle (5) in ihrer durch die Exzentrizität der Excenterbuchse (2) vorgegebenen Position angeordnet ist.

9. Elektromotor nach Anspruch 8, **dadurch gekennzeichnet, dass** die Federscheibe (13) auf ihrem Innenumfang verteilt Aussparungen aufweist, in welche an dem die Abtriebswelle (5) umschließende Abschnitt der Dichtkappe (7) komplementär ausgebildete Rastnasen (14) eingreifen, um die Dichtkappe (7) an der Abtriebswelle (5) zu fixieren.

## Claims

1. Electric motor, in particular wiper motor for motor vehicles (1), having an eccentric bushing (2) which comprises an eccentric bushing collar (3) and an eccentric bushing shaft (4), wherein the eccentric bushing (2) is inserted, by way of its eccentric bushing shaft (4), between an output shaft (5) and a gear mechanism housing (6) in order to adjust the position of the output shaft (5) in the gear mechanism housing (6), **characterized in that** a sealing cap (7) is pushed onto the output shaft (5), the said sealing cap fully surrounding the eccentric bushing collar (3) and the eccentric bushing collar (3) being designed concentrically with the output shaft (5), and the eccentric bushing shaft (4) being designed eccentrically in relation to the output shaft (5).

2. Electric motor according to Claim 1, **characterized in that** the sealing cap (7) runs on the eccentric bushing collar (3).

3. Electric motor according to either of Claims 1 and 2, **characterized in that** the eccentric bushing collar (3) is smoothly calibrated.

4. Electric motor according to one of the preceding claims, **characterized in that** at least two sealing lips (8) are formed in the sealing cap (7) at the region which surrounds the eccentric bushing collar (3).

5. Electric motor according to one of the preceding claims, **characterized in that** the eccentric bushing collar (3) has a circumferential recess for receiving the sealing cap (7).

6. Electric motor according to one of the preceding claims, **characterized in that**, in order to label the position of the eccentricity of the eccentric bushing (2), a marking (15) is arranged on the eccentric bushing collar (3) in such a way that it does not adversely affect the running of the sealing cap (7) on the eccentric bushing collar (3).

7. Electric motor according to one of the preceding claims, **characterized in that** the sealing cap (7) surrounds a space (10) which serves as a lubricant reservoir and/or which can be filled with a water- and dirt-repellent substance, in particular lubricating grease.

8. Electric motor according to one of the preceding claims, **characterized in that** a spring disc (13) for fixing the output shaft (5) in its position which is prespecified by the eccentricity of the eccentric bushing (2) is arranged on the eccentric bushing (2).

9. Electric motor according to Claim 8, **characterized in that** the spring disc (13) has cutouts distributed over its inner circumference, latching lugs (14) which are formed in a complementary manner on that section of the sealing cap (7) which surrounds the output shaft (5) engaging in the said cutouts in order to fix the sealing cap (7) to the output shaft (5).

## Revendications

1. Moteur électrique, en particulier moteur d'essuie-glace pour véhicules automobiles (1), comprenant une douille excentrique (2) qui comprend un épaulement (3) de douille excentrique et une tige (4) de douille excentrique, la douille excentrique (2) étant insérée avec sa tige (4) de douille excentrique entre un arbre de sortie (5) et un boîtier de transmission (6), afin d'ajuster la position de l'arbre de sortie (5) dans le boîtier de transmission (6), **caractérisé en ce qu'**un capuchon d'étanchéité (7) est enfoncé sur l'arbre de sortie (5), lequel tourne complètement autour de l'épaulement (3) de douille excentrique et l'épaulement (3) de douille excentrique est réalisé de manière concentrique à l'arbre de sortie (5), et la tige (4) de douille excentrique est réalisée de manière excentrique par rapport à l'arbre de sortie (5).

2. Moteur électrique selon la revendication 1, **caractérisé en ce que** le capuchon d'étanchéité (7) entoure l'épaulement (3) de douille excentrique.

3. Moteur électrique selon l'une quelconque des revendications 1 à 2, **caractérisé en ce que** l'épaulement (3) de douille excentrique est étalonné de manière à être lisse.

4. Moteur électrique selon l'une quelconque des revendications précédentes, **caractérisé en ce qu'**au moins deux lèvres d'étanchéité (8) sont réalisées dans le capuchon d'étanchéité (7) au niveau de la région entourant l'épaulement (3) de douille excentrique.

5. Moteur électrique selon l'une quelconque des revendications précédentes, **caractérisé en ce que** l'épaulement (3) de douille excentrique présente un évidement périphérique pour recevoir le capuchon d'étanchéité (7).

6. Moteur électrique selon l'une quelconque des revendications précédentes, **caractérisé en ce que** pour caractériser la position d'excentricité de la douille excentrique (2), un marquage (15) est disposé au niveau de l'épaulement (3) de douille excentrique de telle sorte qu'il n'affecte pas la rotation du capuchon d'étanchéité (7) sur l'épaulement (3) de douille excentrique.

7. Moteur électrique selon l'une quelconque des revendications précédentes, **caractérisé en ce que** le capuchon d'étanchéité (7) entoure un espace (10) qui sert de réservoir de lubrifiant et/ou qui peut être rempli avec une substance repoussant l'eau et la saleté, en particulier une graisse de lubrification.

8. Moteur électrique selon l'une quelconque des revendications précédentes, **caractérisé en ce qu'**une rondelle élastique (13) est disposée sur la douille excentrique (2) sur la douille excentrique (2) pour la fixation de l'arbre de sortie (5) dans sa position prédéfinie par l'excentricité de la douille excentrique (2).

9. Moteur électrique selon la revendication 8, **caractérisé en ce que** la rondelle élastique (13) présente des évidements répartis sur sa périphérie intérieure dans lesquels s'engagent des ergots d'encliquetage (14) réalisés de manière complémentaire sur la partie du capuchon d'étanchéité (7) entourant l'arbre de sortie (5), afin de fixer le capuchon d'étanchéité (7) sur l'arbre de sortie (5).
